# EUROPEAN PATENT SPECIFICATION

(11) **EP 1 898 362 B1**
(45) Date of publication and mention of the grant of the patent: **21.11.2018**
(21) Application number: 06766703.0
(22) Date of filing: 14.06.2006
(51) Int. Cl.: G07C 9/00

(54) **DOCUMENT MANAGEMENT SYSTEM**
DOKUMENTVERWALTUNGSSYSTEM
SYSTÈME DE GESTION DE DOCUMENTS

(30) Priority: 16.06.2005 JP 2005175928
(43) Date of publication of application: 12.03.2008
(73) Proprietor: Dai Nippon Printing Co., Ltd., Tokyo 162-8001 (JP)
(72) Inventor: CHIKADA, Takayuki, DAI NIPPON PRINTING CO., LTD., Tokyo 162-8001 (JP)
(74) Representative: Beck Greener
(86) International application number: PCT/JP2006/311934
(87) International publication number: WO 2006/134971

(56) References cited:
- WO-A2-2004/006051
- JP-A- 2001 052 054
- JP-A- 2001 052 054
- JP-A- 2002 211 717
- US-A- 5 708 423
- US-A1- 2002 158 761
- US-A1- 2005 110 638
- US-B1- 6 195 006

## Description

### Technical Field

The present invention relates to a document management system for preventing an important document stored in a document shelf such as a cabinet from being illegally taken out and misused.

### Background Technique

Conventionally, an important document including absolutely confidential contents outside a company, such as a contract, specifications, a design drawing and company data, is strictly managed by a method of storing it in a document shelf such as a cabinet in the company.

Generally, the important document is usually managed and stored in a cabinet including a locking/unlocking device having a key so as not to be stolen and easily seen.

However, some employees may be malicious. There may happen such an office crime that even an employee steals the important document for the purpose of money, requested by a third person.

For example, the employee belonging to the personnel department can easily know the cabinet in which the important document is stored and a storage place of a key for unlocking the cabinet.

Thus, the employee can steal the important document stored in the cabinet by himself or herself when no other workers are in the office, e.g., a holiday. Therefore, the office crime committed by the trusted employee may happen.

The more valuable the information stored in the office becomes, the more office crimes of this kind occurs. It is problematic that the office crime of this kind cannot be easily prevented.

As a background technique, there is proposed a technique for ensuring security, in which information of fingerprints, a voice pattern, a retina and a face of a person unlocking the key is registered in advance and certification is executed based on the registered information at the time of unlocking the key of the box in which the document is stored (see Patent Reference-1, for example).

However, in such a case that the plural employees often take the documents out of the box in which the cabinet is stored and see them at work, a certification process based on the registration information is executed in each time. Therefore, it is problematic that it takes a long time and the efficiency of the work becomes low.

Thereby, unless the important document is taken out of the room in which entrance/leaving is managed by locking/unlocking the key, there is no problem. In consideration of a process of the work, it is efficient that the employee permitted to see the important document can freely see the document in the room.

However, there is no technique that the person having no taking-out authority cannot take the document outside from the exit of the room in which the important document is stored, which is problematically inconvenient.

Patent Reference-1: Japanese Patent Application Laid-open under No. 2003-269024

US-A-5,708,423 describes a system for tracking objects and personnel within a facility. Anntenae are located at portals to detect signals from markers attached to assets. A record is maintained of which zones within the facility an asset is located at a particular time.

JP-A-2001/052054 discloses a method for detecting removal of an object from a shelf. Both objects and users are tracked and the system logs when a user and object move out of range simultaneously.

US-A-2005/0110638 describes a system using radio frequency tags to record ID and time information when a tool is removed from a tool storage box by a user and when a tool is removed from a storage facility by a user.

### Disclosure of Invention

### PROBLEM TO BE SOLVED BY THE INVENTION

It is an object of this invention to provide a document management system for preventing an employee having no taking-out authority from easily taking an important document stored in a cabinet out of an exit of a room in order to prevent an office crime such as a crime of taking out the important document by the employee.

### Means for Solving the Problem

It is an object of the present invention to provide a document management system, for preventing a stored document from being illegally taken out of a room, according to claim 1.

According to a non-claimed embodiment, there is provided a document management system for preventing a stored document from being illegally taken out of a room, including: a document to which a non-contact information storage medium in which document identification information is stored is attached; an information storage medium reading device which includes a reading unit for reading the document identification information from the information storage medium of the document stored in a document shelf without contact and a unit for transmitting a signal to a processing device when the document identification information read by the reading unit becomes unreadable; a non-contact portable information storage medium in which individual identification information is stored; a first portable information storage medium reading device which reads the individual identification information from the portable information storage medium of a document taking-off person who takes off the document from the document shelf; a locking/unlocking device which controls locking/unlocking of an exit door of the room; a second portable information storage medium reading device which is located in a vicinity of the exit door of the room; and an information processing device which is connected to and communicates with the first portable information storage medium reading device, the second portable information storage medium reading device, the information storage medium reading device and the locking/unlocking device, wherein the information processing device includes a document information database in which the document identification information of the information storage medium attached to the document stored in the document shelf is registered; a document taking-out authority information database which is associated with the individual identification information and in which document identification information of a document permitted to take out is registered; a taking-off document specifying unit which specifies the document identification information of the document taken off based on the document information database at a time of receiving the signal from the information storage medium reading device; a determination unit which determines whether or not the document taking-off person has a taking-out authority of the document from the individual identification information received from the first portable information storage medium reading device and the document identification information of the document specified by the taking-off document specifying unit, based on the information registered in the document taking-out authority information database; and a unit which transmits a signal for unlocking a lock state of the exit door to the locking/unlocking device in such a case that the document taking-off person is determined to have the taking-out authority in the determination unit at a time of receiving the individual identification information from the second portable information storage medium reading device.

In accordance with the above document management system, unless the document taking-out authority registered in advance is given to the employee, even the employee can unlock the exit door of the room. Thus, there is such an effect that the office crime such as the crime of taking out the importance document by the employee can be prevented.

In a manner of the above document management system, the non-contact information storage medium may be an RFID wireless tag; the information storage medium reading device may be a tag reader; the non-contact portable information storage medium may be a non-contact IC card; and the portable information storage medium reading device may be an IC card reader.

In accordance with the above document management system, the document taking-out information is obtained by adding the RFID wireless tag to the document, and the determination process of the taking-out authority of the person leaving the room including the document is executed by the non-contact IC card. Thereby, there is an effect capable of preventing the person having no taking-out authority from illegally taking out the document.

### BRIEF DESCRIPTION OF THE DRAWINGS

FIG. 1 is a diagram for schematically explaining a configuration of a document management system according to an embodiment of the present invention;
FIG. 2 is a block diagram of the document management system according to the embodiment of the present invention;
FIG. 3 is a diagram showing an example of registration information of a document information database provided in an information processing device of the document management system according to the embodiment of the present invention;
FIG. 4 is a diagram showing an example of registration information of a document taking-out authority information database provided in the information processing device of the document management system according to the embodiment of the present invention;
FIG. 5 is a diagram showing an example of registration information of an employee information database provided in the information processing device of the document management system according to the embodiment of the present invention; and
FIG. 6 is a flow chart showing a procedure of the document management system according to the embodiment of the present invention.

### BRIEF DESCRIPTION OF THE REFERENCE NUMBER

- 1: Document
- 2: RFID wireless tag
- 3: Document shelf
- 4, 10: Tag readers
- 5, 13: IC card readers
- 6: Non-contact IC card
- 7: Employee
- 8: Communication circuit
- 9: Information processing device
- 11: Locking/unlocking device
- 12: Exit door
- 14: Room
- 15: Space area in vicinity of exit door
- 16: Partition
- 17: Passage

### DETAILED DESCRIPTION OF THE PREFERRED EMBODIMENTS

Now, a detailed description will be given of a document management system according to an embodiment of the present invention, with reference to the attached drawings.

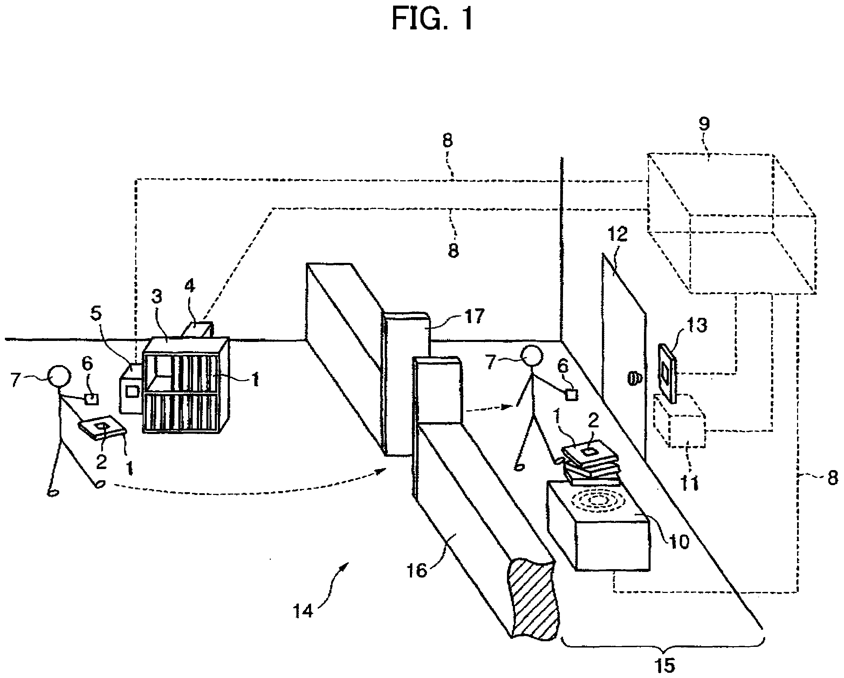

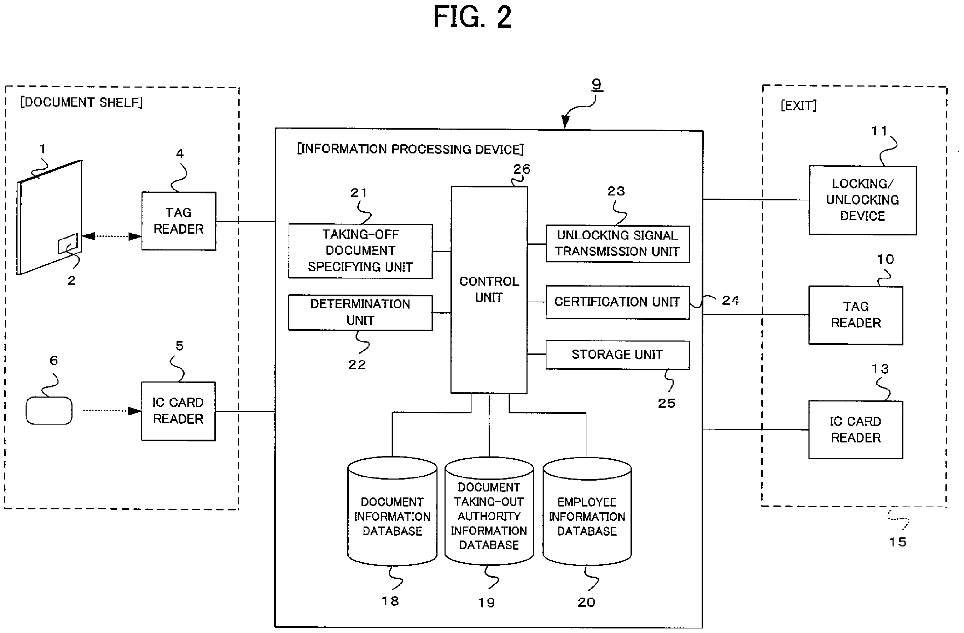

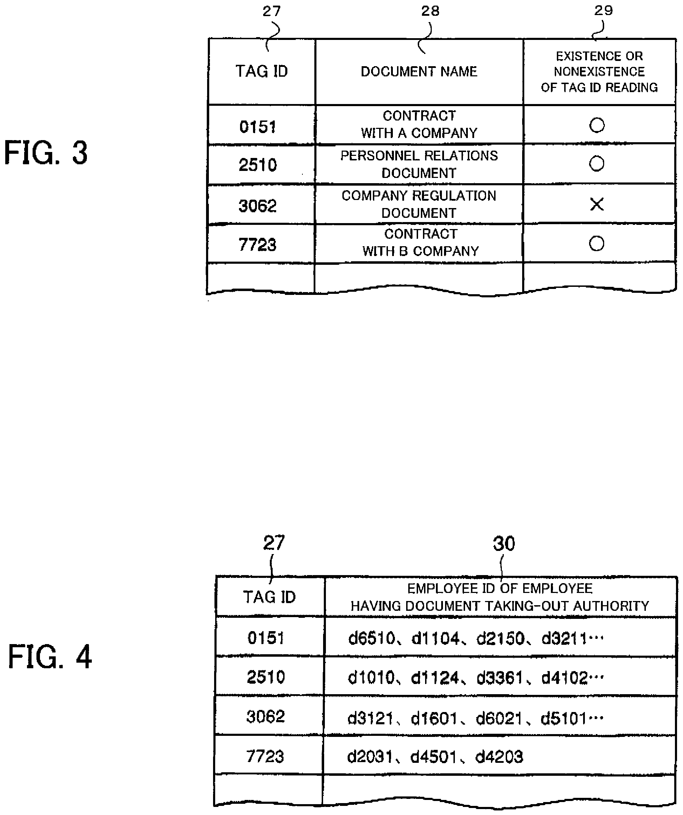

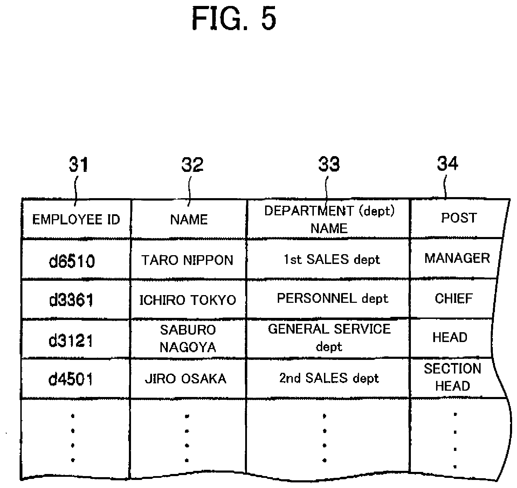

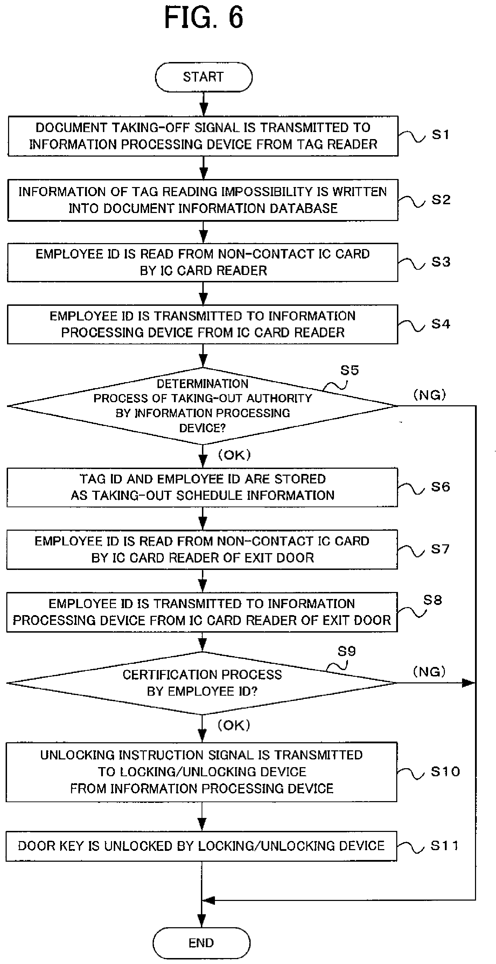

FIG. 1 is a diagram for schematically explaining a configuration of a document management system according to the embodiment of the present invention. FIG. 2 is a block diagram of the document management system according to the embodiment of the present invention. FIG. 3 is a diagram showing an example of registration information of a document information database provided in an information processing device of the document management system according to the embodiment of the present invention. FIG. 4 is a diagram showing an example of registration information of a document taking-out authority information database provided in the information processing device of the document management system according to the embodiment of the present invention. FIG. 5 is a diagram showing an example of registration information of an employee information database provided in the information processing device of the document management system according to the embodiment of the present invention. FIG. 6 is a flow chart showing a procedure of the document management system according to the embodiment of the present invention.

As shown in FIG. 1, an RFIDwireless tag 2 being a non-contact information storage medium is attached to an important document 1 for which taking-out to the outside of the room is managed, and the important document 1 is stored in a document shelf 3.

The document shelf 3 may be a cabinet including a locking/unlocking device with a door or a shelf without a door. Anyway, the document shelf 3 includes a tag reader 4 being an information storage medium recording device which reads a tag ID stored in the RFID wireless tag 2 of the document 1 stored in the document shelf 3 without contact.

An antenna is located on the document shelf 3 so that the tag reader 4 provided in the document shelf 3 can always read the tag IDs stored in the RFID wireless tags 2 of all the documents 1 stored in the document shelf 3. Then, the tag reader 4 is located in order to receive the tag IDs with radio waves.

The distance readable by the tag reader 4 is set to substantially several ten centimeters . If the document 1 is taken out of the document shelf 3 to be away from the document shelf 3, it becomes impossible to read the tag ID stored in the RFID wireless tag 2 attached to the document 1.

The document shelf 3 includes a first IC card reader 5 without contact, which is a first portable information storage medium reading device.

It is unnecessary that the IC card reader 5 is directly located in the document shelf 3. Namely, the IC card reader 5 may be located in the vicinity of the document shelf 3.

Anon-contact IC card 6 being a portable information storage medium in which an employee ID being the individual identification information is stored is issued to an employee 7 as an employee ID card, which makes it possible to read the employee ID stored on the non-contact IC card 6 by the IC card reader 5.

The tag reader 4 and the IC card reader 5 are connected to and communicate with an information processing device 9 via a communication circuit 8.

Then, by the tag reader 4 provided in the document shelf 3, the tag ID stored in the RFID wireless tag 2 attached to the document 1, which is always read, is transmitted to the information processing device 9 via the communication circuit 8.

Therefore, when the employee 7 takes out the document 1 stored in the document shelf 3 and the tag ID always read by the tag reader 4 cannot be read, the transmission of the tag ID always transmitted from the tag reader 4 is stopped, whichmakes it possible for the information processing device 9 to determine if the document 1 is taken out of the document shelf 3.

In addition, the employee ID read from the non-contact IC card 6 by the IC card reader 5 is also transmitted to the information processing device 9 via the communication circuit 8.

By making the IC card reader 5 read the employee ID stored on the non-contact IC card 6 at the time of taking off the document 1 from the document shelf 3, the employee 7 transmits the employee ID to the information processing device 9.

Thereby, when the document 1 is taken off from the document shelf 3, the employee ID and the tag ID information for stopping reading the tag ID, incapable of reading the tag ID, are transmitted to the information processing device 9, which makes it possible to manage the taking-off information of the document 1 in the information processing device 9.

The tag reader 10 being the information storage medium reading device is located in the vicinity of the exit door 12 of the room.

The tag reader 10 is used at the time of taking out the document other than the document 1 stored in the document shelf 3. When the tag ID stored in the RFID wireless tag 2 attached to the document is put close to the tag reader 10, the tag reader 10 reads the tag ID and transmits the tag ID to the information processing device 9 via the communication circuit 8.

Moreover, a locking/unlocking device 11 for controlling unlocking the exit door 12 is located at the exit door 12 of the room.

The locking/unlocking device 11 is connected to and communicates with the information processing device 9 via the communication circuit 8 to communicate with the information processing device 9.

The exit door 10 is always locked with the key by the locking/unlocking device 11. On receiving an instruction signal from the information processing device 9, the locking/unlocking device 11 executes electrical control and unlocks the exit door 12 so that the employee 7 opens the exit door 12 and goes out of the room.

A second IC card reader 13 being a second portable information storage medium reading device is arranged in the vicinity of the exit door 12 so that the stored employee ID can be read from the non-contact IC card 6 of the employee 7 who opens the exit door 12 and goes out of the room.

The IC card reader 13 is connected to and communicates with the information processing device 9 via the communication circuit 8. The employee ID read by the IC card reader 13 is transmitted to the information processing device 9.

A partition 16 for dividing a space area 15 in the vicinity of the exit door 12 from other space area including the document shelf 3 is located in the room 14. Further, a passage 17 for the employee 7 to pass through is arranged at the part of the partition 16.

The plural employees cannot enter the space area 15 in the vicinity of the exit door 12 parted by the partition 16. Namely, only the single employee can enter the space area 15 so that the non-contact IC card 6 is read by the IC card reader 13 and the employee exits the space area 15 through the exit door 12.

Thereby, it prevents that the illegal employee receiving no certification exits the space area 15 through the exit door 12 with the certificated employee in the single certification process based on the non-contact IC card 6.

Next, a description will be given of the information processing device 9, based on FIG. 2 to FIG. 5.

The information processing device 9 includes a document information database 18, a document taking-out authority information database 19, an employee information database 20, a taking-off document specifying unit 21, a determination unit 22, an unlocking signal transmission unit 23, a certification unit 24, a storage unit 25 and a control unit 26.

As shown in FIG. 3, as for the document 1 stored in the document shelf 3, the document information database 18 registers a tag ID 27, a document name 28, and existence or nonexistence information 29 of tag ID reading, which shows whether or not the information processing device 9 is receiving the information of the tag ID 27 read by the tag reader 4 from the tag reader 4 located on the document shelf 3, for each RFID wireless tag 2 attached to the document 1.

In the case shown in FIG. 3, a document of a tag ID "3062" has "×" in the existence or nonexistence information 29 of the tag ID reading, which shows that the document is taken off from the document shelf.

As described above, by confirming the information stored in the document information database 18, it becomes possible to check which document is stored in the document shelf 3 and which document is taken off.

Next, the document taking-out authority information database 19 registers an employee ID 30 of the employee having the authority to take the document out of the room for each tag ID 27 of the RFID wireless tag 2 attached to the document 1.

By the registration information of the document taking-out authority information database 19, it is checked who has the authority to take the document out of the room for each document. It is prevented that the employee having no taking-out authority given by the document taking-out authority information database 19 takes the document out of the room.

It becomes possible to change the taking-out authority for each document, as need arises, e.g., personnel transfer. In this case, the document management is enforced by requesting the approval of the person having the formal authority of the document management.

Next, the employee information database 20 registers employee information such as an employee ID 31, a name 32, a department name 33 and a post 34.

Based on the employee ID 31 registered in the employee information database 20 and the employee ID 30 of the employee having the taking-out authority registered in the document taking-out authority information database 19, it becomes possible to specify who has the taking-out authority for each document.

When the employee takes the document out of the document shelf 3 and the information of the tag ID 27 read by the tag reader 4 becomes unreceivable, the information processing device 9 receives the information indicating that the tag ID unreceivable from the tag reader 4 exists. Thereby, the taking-off document specifying unit 21 specifies the document including the unreadable tag ID based on the registration information of the document information database 18, and writes "x" into the existence or nonexistence information 29 of the tag ID reading.

The determination unit 22 makes the IC card reader 5 read the employee ID stored on the non-contact IC card 6 when the employee 7 takes the document 1 out of the document shelf 3. Subsequently, the determination unit 22 collates the employee ID received by the information processing device 9 and the tag ID, specified by the taking-off document specifying unit 21 and stored in the RFID wireless tag 2 attached to the document which the employee takes off from the document shelf 3, with the registration information of the document taking-out authority information database 19. Then, the determination unit 22 determines whether or not the employee has the authority to take the document out of the room.

When the employee is determined to have the document taking-out authority, the determination unit 22 transmits, to the unlocking signal transmission unit 23, the signal for permitting to transmit the instruction signal for instructing to unlock the exit door 12 to the locking/unlocking device 11 from the information processing device 9.

When the IC card reader 13 arranged in the vicinity of the exit door 12 reads the employee ID from the non-contact IC card 6 of the employee 7 and the employee ID is transmitted to the information processing device 9 from the IC card reader 13, the information processing device 9 executes the certification process based on the received employee ID and the registration information of the employee information database 20, and determines whether or not to open the exit door 12. When the certification is approved, the certification unit 24 transmits, to the unlocking signal transmission unit 23, the signal for permitting to transmit the instruction signal for instructing to unlock the exit door 12 from the information processing device 9 to the locking/unlocking device 11.

Next, the unlocking signal transmission unit 23 transmits, to the unlocking device 11 from the information processing device 9, the instruction signal for instructing to unlock the exit door 12. Some conditions for transmitting the instruction signal are determined.

The first condition is that the signal for permitting to transmit the instruction signal for instructing to unlock the exit door 12 from the information processing device 9 to the locking/unlocking device 11 is received from the determination unit 22 and the certification unit 24.

The second condition is that the signal for permitting to transmit the instruction signal for instructing to unlock the exit door 12 from the information processing device 9 to the locking/unlocking device 11 is received from the certification unit 24, and that there is no document taken off from the document shelf 3 from the information of the document information database 18.

The third condition will now be described. Namely, the signal for permitting to transmit the instruction signal for instructing to unlock the exit door 12 from the information processing device 9 to the locking/unlocking device 11 is received from the certification unit 24; the tag ID of the RFID wireless tag 2 read by the tag reader 10 arranged in the vicinity of the exit is received by the information processing device 9; the determination unit 22 determines that the employee has the document taking-out authority; and the instruction signal for instructing to unlock the exit door 12 from the information processing device 9 to the locking/unlocking device 11 is received by the unlocking signal transmission unit 23.

When the above three conditions are satisfied, the instruction signal for instructing to unlock the exit door 12 is transmitted to the locking/unlocking device 11 from the information processing device 9, and the locking/unlocking device 11 unlocks the exit door based on the received instruction signal.

Namely, the above first condition is effective in such a case that the single employee takes out the document, and the above second condition is effective in such a case that the employee leaves the room without taking out the document. Further, the above third condition is effective in such a case that the plural employees take off the documents from the document shelf 3 in the room.

In addition, it is determined that the above third condition is prior to the above first condition.

Thereby, even when the plural employees take off the documents from the document shelf 3 in the room, if the tag reader 10 temporarily reads the tag ID of the RFID wireless tag 2 of the document, it becomes possible to take the document out of the room even if the document taken off from the document shelf 3 by the other employee exists.

Next, a description will be given of a procedure of the document management system of the present invention, with reference to a flow chart shown in FIG. 6.

First, when the employee 7 takes the desired document 1 out of the document shelf 3, the tag reader 4 of the document shelf 3 cannot read the tag ID stored in the RFID wireless tag 2, and a document taking-off signal showing that reading becomes impossible is transmitted to the information processing device 9 from the tag reader 4 (step S1).

The information processing device 9 writes the information "×" showing that reading becomes impossible into the existence or nonexistence information of tag reading stored in the document information database 18, based on the receiving signal of the document taking-off signal (step S2).

When the employee 7 takes the desired document 1 out of the document shelf 3, the IC card reader 5 reads the employee ID stored on the non-contact IC card 6 (step S3).

Then, the employee ID is transmitted to the information processing device 9 from the IC card reader 5 (step S4).

The information processing device 9 executes the determination process whether or not the employee 7 has the authority to take the document 1 out of the room 14 on the basis of the information registered in the document taking-out authority information database 19 from the tag ID received from the tag reader 4 and the employee ID received from the IC card reader 5 (step S5).

When it is determined that the employee 7 has the authority to take the document 1 out of the room 14 in the determination process, the tag ID and the employee ID are temporarily stored in the storage unit 25, as taking-out schedule information (step S6) .

Then, the employee 7 passes through the passage 17 of the partition 16 to move to the space area 15 in the vicinity of the exit door 12 so as to take the document 1 out of the room 14. Then, the IC card reader 13 reads the employee ID stored on the non-contact IC card 6 (step S7).

The employee ID is transmitted to the information processing device 9 from the IC card reader 13 (step S8).

Next, the information processing device 9 collates the received employee ID and the employee ID 31 registered in the employee information database 20, and executes the certification process of the employee (step S9).

In such a case that the employee is approved in the certification process, it is confirmed whether or not the taking-out schedule information is stored in the storage unit 25. In such a condition that the employee ID with the approved certification coincides with the employee ID stored as the taking-out schedule information, the instruction signal for indicating the unlocking is transmitted to the locking/unlocking device 11 by the unlocking signal transmission unit 23 of the information processing device 9 (step S10).

On receiving the instruction signal for instructing the unlocking from the information processing device 9, the locking/unlocking device 11 unlocks the exit door 12 (step S11) .

As described above, in the document management system of the present invention, the locking/unlocking device 11 controls opening/closing of the key of the exit door 12, and the locking/unlocking device 11 is controlled based on the instruction signal from the information processing device 9. Further, the information processing device 9 is controlled by the result of the determination process and the approval process based on the receiving information from the tag reader 4 of the document shelf 3, the IC card reader 5 and the IC card reader 13 located in the vicinity of the exit door 12. Therefore, the existence or nonexistence of the taking-out authority is determined for each document, and thus, even the employee cannot take out the document without the document taking-out authority.

### INDUSTRIAL APPLICABILITY

The present invention is usable for a document management system in a corporation, a public institution and the like.

## Claims

1. A document management system for preventing a stored document (1) from being illegally taken out of a room, comprising:
a document (1) to which is attached an RFID wireless tag(2) storing document identification information;
a first tag reader (4) for reading the document identification information from the RFID tag (2) of the document stored in a document shelf (3) without contact, and a unit for transmitting a signal to a processing device (9) when the document identification information read by the first tag reader (4) becomes unreadable;
a non-contact IC card (6) on which individual identification information is stored;
a first IC card reader (5) which reads the individual identification information from the non-contact IC card (6) of a person who takes the document (1) from the document shelf (3);
a locking/unlocking device (11) which controls locking/unlocking of an exit door (12) of the room;
a second tag reader (10) located in the vicinity of the exit door (12) of the room for reading the document identification information from the RFID tag (2) of a document; and
a second IC card reader (13) located in the vicinity of the exit door (12) of the room which reads the individual identification information from the non-contact IC card (6) of a person who leaves the room, wherein
the information processing device (9) is connected to and communicates with the first and second IC card readers (5, 13), the first and second tag readers (4, 10), and the locking/unlocking device (11),
the information processing device (9) includes:
a document information database (18) in which is registered the document identification information of the RFID wireless tag (2)attached to the document (1) stored in the document shelf;
a document taking-out authority information database (19) which registers for each tag ID of the RFID wireless tag attached to each document the individual identification information of persons having the authority to take the document out of the room;
a taking-off document specifying unit (21) which specifies the document identification information of the document (1) taken off based on the document information database (18) at a time of receiving the signal from the first tag reader (4);
a determination unit (22) which collates the individual identification information received from the first IC card reader (5) and the document identification information specified by the taking-off document specifying unit (21) with the information registered in the document taking-out authority information database (19) to determine whether the person has authority to take out the document;
wherein the information processing device (9) receives the individual identification information from the second IC card reader (13) in the vicinity of the exit, and receives document identification information from the second tag reader (10) arranged in the vicinity of the exit via a communication circuit (8), and the determination unit (22) determines whether the person has authority to take out the document; and
a unit (23) which transmits a signal for unlocking the exit door to the locking/unlocking device (11) when the document taking out person has been determined to have authority to take out the document by the determination unit (22) at the time of receiving the individual identification information from the second IC card reader (13).

## Patentansprüche

1. Dokumentenverwaltungssystem zur Verhinderung, dass ein gelagertes Dokument (1) illegal aus einem Raum entwendet wird, umfassend:
ein Dokument (1), an das ein drahtloses RFID-Etikett (2) angebracht ist, das eine Dokumentenidentifikationsinformation speichert;
einen ersten Etikettenleser (4) zum berührungslosen Lesen der Dokumentenidentifikationsinformation von dem RFID-Etikett (2) des Dokuments, das in einer Dokumentenablage (3) gelagert ist, und eine Einheit zum Senden eines Signals an eine Verarbeitungsvorrichtung (9), wenn die von dem ersten Etikettenleser (4) gelesene Dokumentenidentifikationsinformation unlesbar wird;
eine kontaktlose IC-Karte (6), auf der eine individuelle Identifikationsinformation gespeichert ist;
einen ersten IC-Kartenleser (5), der die individuelle Identifikationsinformation von der kontaktlosen IC-Karte (6) einer Person liest, die das Dokument (1) aus der Dokumentenablage (3) nimmt;
eine Verriegelungs-/Entriegelungsvorrichtung (11), die die Verriegelung/Entriegelung eine Ausgangstür (12) des Raums steuert;
einen zweiten Etikettenleser (10), der sich in der Nähe der Ausgangstür (12) des Raums befindet, zum Lesen der Dokumentenidentifikationsinformation von dem RFID-Etikett (2) eines Dokuments und
einen zweiten IC-Kartenleser (13), der sich in der Nähe der Ausgangstür (12) des Raums befindet, der die individuelle Identifikationsinformation von der kontaktlosen IC-Karte (6) einer Person liest, die den Raum verlässt, wobei
die Informationsverarbeitungsvorrichtung (9) mit dem ersten und dem zweiten IC-Kartenleser (5, 13), dem ersten und dem zweiten Etikettenleser (4, 10) und der Verriegelungs-/Entriegelungsvorrichtung (11) verbunden ist und mit diesen kommuniziert,
die Informationsverarbeitungsvorrichtung (9) umfasst:
eine Dokumenteninformationsdatenbank (18), in der die Dokumentenidentifikationsinformation des drahtlosen RFID-Etiketts (2), das an dem Dokument (1) angebracht ist, das in der Dokumentenablage gelagert ist, registriert ist;
eine Dokumentenentfernungsbefugnisinformationsdatenbank (19), die für jede Etiketten-ID des drahtlosen RFID-Etiketts, das an jedem Dokument angebracht ist, die individuelle Identifikationsinformation von Personen mit der Befugnis zum Entfernen des Dokuments aus dem Raum registriert;
eine Dokumentenentnahmespezifizierungseinheit (21), die die Dokumentenidentifikationsinformation des entnommenen Dokuments (1) auf der Basis der Dokumenteninformationsdatenbank (18) zu einer Zeit des Empfangens des Signals von dem ersten Etikettenleser (4) spezifiziert;
eine Bestimmungseinheit (22), die die individuelle Identifikationsinformation, die von dem ersten IC-Kartenleser (5) empfangen wird, und die Dokumentenidentifikationsinformation, die von der Dokumentenentnahmespezifizierungseinheit (21) spezifiziert wurde, mit der Information, die in der Dokumentenentfernungsbefugnisinformationsdatenbank (19) registriert ist, vereinigt, um zu bestimmen, ob die Person eine Befugnis zum Entfernen des Dokuments hat;
wobei die Informationsverarbeitungsvorrichtung (9) die individuelle Identifikationsinformation von dem zweiten IC-Kartenleser (13) in der Nähe des Ausgangs empfängt und eine Dokumentenidentifikationsinformation von dem zweiten Etikettenleser (10), der in der Nähe des Ausgangs angeordnet ist, mittels einer Kommunikationsschaltung (8) empfängt und die Bestimmungseinheit (22) bestimmt, ob die Person eine Befugnis zum Entfernen des Dokuments hat;
eine Einheit (23), die ein Signal zum Entriegeln der Ausgangstür an die Verriegelungs-/Entriegelungsvorrichtung (11) sendet, wenn von der Bestimmungseinheit (22) zur Zeit des Empfangens der individuellen Identifikationsinformation von dem zweiten IC-Kartenleser (13) von der ein Dokument entfernenden Person bestimmt wurde, dass sie eine Befugnis zum Entfernen des Dokuments hat.

## Revendications

1. Système de gestion de document pour empêcher un document stocké (1) d'être retiré illégalement d'une pièce, comprenant :
un document (1) auquel est fixée une étiquette sans fil d'identification par radiofréquence, RFID, (2) stockant des informations d'identification de document ;
un premier lecteur d'étiquette (4) pour lire les informations d'identification de document à partir de l'étiquette RFID (2) du document stocké sur une étagère de documents (3) sans contact, et une unité pour émettre un signal à destination d'un dispositif de traitement (9) lorsque les informations d'identification de document lues par le premier lecteur d'étiquette (4) deviennent illisibles ;
une carte à circuits intégrés, IC, sans contact (6) sur laquelle des informations d'identification d'individu sont stockées ;
un premier lecteur de carte IC (5) qui lit les informations d'identification d'individu à partir de la carte IC sans contact (6) d'une personne qui retire le document (1) de l'étagère de documents (3) ;
un dispositif de verrouillage/déverrouillage (11) qui commande le verrouillage/déverrouillage d'une porte de sortie (12) de la pièce ;
un second lecteur d'étiquette (10) situé au voisinage de la porte de sortie (12) de la pièce pour lire les informations d'identification de document à partir de l'étiquette RFID (2) d'un document ; et
un second lecteur de carte IC (13) situé au voisinage de la porte de sortie (12) de la pièce qui lit les informations d'identification d'individu à partir de la carte IC sans contact (6) d'une personne qui quitte la pièce,
le dispositif de traitement d'informations (9) étant connecté à et communiquant avec les premier et second lecteurs de carte IC (5, 13), les premier et second lecteurs d'étiquette (4, 10) et le dispositif de verrouillage/déverrouillage (11),
le dispositif de traitement d'informations (9) comprenant :
une base de données d'informations de document (18) dans laquelle sont enregistrées les informations d'identification de document de l'étiquette sans fil RFID (2) fixée au document (1) stocké sur l'étagère de documents ;
une base de données d'informations de pouvoir de retrait de document (19) qui enregistre, pour chaque ID d'étiquette de l'étiquette sans fil RFID fixée à chaque document, les informations d'identification d'individu de personnes ayant le pouvoir de retirer le document de la pièce ;
une unité de spécification de retrait de document (21) qui spécifie les informations d'identification de document du document (1) retiré sur la base de la base de données d'informations de document (18) au moment de la réception du signal à partir du premier lecteur d'étiquette (4) ;
une unité de détermination (22) qui collecte les informations d'identification d'individu reçues à partir du premier lecteur de carte IC (5) et les informations d'identification de document spécifiées par l'unité de spécification de retrait de document (21) avec les informations enregistrées dans la base de données d'informations de pouvoir de retrait de document (19) pour déterminer si la personne a ou non le pouvoir de retirer le document ;
le dispositif de traitement d'informations (9) recevant les informations d'identification d'individu à partir du second lecteur de carte IC (13) au voisinage de la sortie, et recevant des informations d'identification de document à partir du second lecteur d'étiquette (10) agencé au voisinage de la sortie par l'intermédiaire d'un circuit de communication (8), et l'unité de détermination (22) déterminant si la personne a ou non le pouvoir de retirer le document ; et
une unité (23) qui émet un signal pour déverrouiller la porte de sortie à destination du dispositif de verrouillage/déverrouillage (11) lorsque la personne qui retire le document a été déterminée comme ayant le pouvoir de retirer le document par l'unité de détermination (22) au moment de la réception des informations d'identification d'individu à partir du second lecteur de carte IC (13).
